# EUROPEAN PATENT APPLICATION

(11) **EP 4 791 070 A1**
(43) Date of publication of application: **12.08.2026**
(21) Application number: 23954822.5
(22) Date of filing: 06.10.2023
(51) Int. Cl.: H04W 24/10, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2023/036540
(87) International publication number: WO 2025/074614

(57) **Abstract**

A terminal according to one aspect of the present disclosure includes a receiving section that receives configuration information related to configuration of a plurality of channel measurement resources for coherent joint transmission (CJT), and a control section that judges, based on an indicated unified transmission configuration indicator (TCI) state corresponding to a downlink shared channel (PDSCH) applied with the CJT, one or more channel measurement resources on which at least one of monitoring, measurement, and reporting is to be performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), reporting of channel state information (CSI) based on reference signal reception is under study. It is also studied that a plurality of transmission/reception points (multiple Transmission/Reception Points (TRPs), multi-TRP (MTRP)) or a plurality of panels (multiple panels, multi-panel) perform DL transmission to a terminal (user terminal, User Equipment (UE)). Coherent joint transmission (CJT) using multi-TRP/multi-panel is also under study.

However, studies have not sufficiently been made on how to perform channel/signal configuration or the like when a DL channel/signal (for example, a PDSCH/CSI measurement resource or the like) applied/supported with CJT is supported.

Thus, an object of the present disclosure is to provide a terminal, a radio communication method, and a base station that enable appropriate communication even when CJT is applied/supported for a DL channel/signal.

### Solution to Problem

A terminal according to one aspect of the present disclosure includes a receiving section that receives configuration information related to configuration of a plurality of channel measurement resources for coherent joint transmission (CJT), and a control section that judges, based on an indicated unified transmission configuration indicator (TCI) state corresponding to a downlink shared channel (PDSCH) applied with the CJT, one or more channel measurement resources on which at least one of monitoring, measurement, and reporting is to be performed. Advantageous Effects of Invention

According to one aspect of the present disclosure, even when CJT is applied/supported for a DL channel/signal, communication can be appropriately performed.

### Brief Description of Drawings

[FIG. 1] FIG. 1A and FIG. 1B are diagrams to show examples of an indicated unified TCI state applied to a CJT-PDSCH, and unified TCI states corresponding to CMRs, according to embodiment 1.
[FIG. 2] FIG. 2A and FIG. 2B are diagrams to show examples of an indicated unified TCI state applied to a CJT-PDSCH, and unified TCI states corresponding to CMRs, according to embodiment 2.
[FIG. 3] FIG. 3 is a diagram to show an example of a plurality of CMRs associated with unified TCI states, according to embodiment 2.
[FIG. 4] FIG. 4 is a diagram to show an example of an indicated unified TCI state applied to a CJT-PDSCH, and unified TCI states corresponding to CMRs, according to embodiment 3.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.
[FIG. 9] FIG. 9 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one parameter of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

In the present disclosure, a port (antenna port) for a signal (resource, channel) being QCLed with an RS (DL RS, QCL source RS), a port for a signal and an RS being in a QCL relationship, a signal being QCLed with an RS, a signal being QCLed with an RS in a TCI state, a signal being QCLed with an RS in a TCI state in relation to a specific QCL type, a signal being associated with a TCI state, a TCI state being configured/indicated for a signal, and a UE assuming that a port for a signal is QCLed with an RS in a TCI state may be interchangeably interpreted.

In the present disclosure, a beam, an SD beam, a spatial domain index, precoding, a precoder, quasi co-location (QCL) assumption, a QCL relationship, a transmission configuration indicator (TCI) state, a spatial domain filter, a spatial domain reception filter, a spatial domain transmission filter, a reference signal (RS), and a spatial reception parameter may be interchangeably interpreted.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, indication of one common beam using RRC/MAC CE/DCI may be supported, and the one common beam may be applied to a plurality of DL/UL channels/reference signals. For Rel. 18 or later versions, another case may be supported.

For a joint DL/UL TCI state, an RRC parameter (information element) configures a plurality of TCI states for both DL and UL. The MAC CE may activate a plurality of TCI states among the plurality of configured TCI states. DCI may indicate one of the plurality of activated TCI states.

The DCI may be UL DCI (for example, DCI used to schedule a PUSCH) or DL DCI (for example, DCI used to schedule a PDSCH). The indicated TCI state may be applied to at least one (or all) of UL/DL channels/RSs. One piece of DCI may indicate both a UL TCI and a DL TCI.

One indicated TCI state ID may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

For separate TCI states (for example, Separate TCI (DL TCI state and UL TCI state)), an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

A joint TCI state and a separate (DL/UL) TCI state may be switched to each other and may be applied. Which of a joint TCI state or a separate TCI state is to be applied may be configured from a base station to the UE via a higher layer parameter, or may be switched by a TCI field (TCI state ID) in DCI.

A unified TCI framework supports modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

Note that the DCI in mode 2/mode 3 may be referred to as beam indication DCI.

In the present disclosure, a TCI state indicated by DCI, an indicated TCI state, a unified TCI state, a TCI state applied to a plurality of types of channels/signals, a joint TCI state (for DL and UL), a DL TCI state, a UL TCI state, a Rel-17 TCI state, a common TCI state, a single configured unified TCI state, and a single activated unified TCI state may be interchangeably interpreted.

In the present disclosure, a TCI state configured by an RRC parameter, a configured TCI state, a TCI state not following a unified TCI state, a TCI state other than a unified TCI state, a TCI state/spatial relation configured for a specific channel/signal, and a dedicated TCI state may be interchangeably interpreted.

A unified/common TCI state may mean an indicated TCI state indicated by using DCI/MAC CE/RRC (of Rel. 17).

The indicated TCI state may be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state.

When an indicated TCI state is supported (in Rel. 17), a TCI state other than a unified TCI state may mean a TCI state (configured TCI state) configured by using a MAC CE/RRC (of Rel. 17).

The configured TCI state may not be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. The configured TCI state may be configured by RRC/MAC CE for each CORESET/each resource/each resource set, and may not be updated even when the above-described indicated TCI state is updated.

It is studied that an indicated TCI state is applied to a UE-specific channel/signal (RS). It is studied to notify the UE of which of an indicated TCI state or a configured TCI state is to be applied to a non-UE-specific channel/signal, by using higher layer signaling (RRC signaling).

It is studied that an RRC parameter related to a configured TCI state (TCI state ID) has the same configuration as that of an RRC parameter related to a TCI state in Rel. 15/16. It is studied that the configured TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated TCI state and non-application of the indicated TCI state (application of a configured TCI state, application of a TCI state configured separately from the indicated TCI state) is performed by using higher layer signaling (RRC/MAC CE).

For intra-cell beam indication (TCI state indication), it is studied that an indicated TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 or later versions, for TCI state indication (of Rel. 17) for CORESET #0, whether to apply an indicated TCI state associated with a serving cell (indicated Rel-17 TCI state associated with the serving cell) may be configured for each CORESET by RRC, and when the indicated TCI state is not applied, an existing MAC CE/RACH signaling mechanism (legacy MAC CE/RACH signalling mechanism) may be used.

Note that, in Rel. 17, a CSI-RS associated with a TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated TCI state may be configured by an RRC parameter. When the CORESET is not configured to follow the indicated TCI state, a configured TCI state may be applied to the CORESET.

For non-UE-dedicated channels/RSs (excluding CORESETs), whether each channel/resource/resource set follows an indicated TCI state may be configured by an RRC parameter. When the channel/resource/resource set is not configured to follow the indicated TCI state, a configured TCI state may be applied to the channel/resource/resource set.

### {Antenna Port QCL...Physical Layer Procedure for Data}

The UE can be configured with a list of up to M TCI-States in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC." Each TCI-State includes a parameter for configuration of a QCL relationship between one or two downlink reference signals and a DM-RS port for a PDSCH, a DM-RS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured). In a case of two DL RSs, QCL types are not the same irrespective of whether the reference is reference to the same DL RS or reference to different DL RSs. A QCL type corresponding to each DL RS may be given by a higher layer parameter "qcl-Type" in QCL-Info, and may take one of the following values:
- 'type A': {Doppler shift, Doppler spread, average delay, delay spread}
- 'type B': {Doppler shift, Doppler spread}
- 'type C': {Doppler shift, average delay}
- 'type D': {spatial Rx parameter}

To provide a reference signal for a PDSCH DMRS and a PDCCH DMRS and a CSI-RS in a given CC, and furthermore, to provide, if a UL TX (transmission) spatial filter for dynamic grant and configured grant-based PUSCH and PUCCH resources and an SRS in the given CC is available, a reference for determination of the UL TCI filter, the UE can be configured with a list of up to 128 DLorJointTCIState (DL or joint TCI state) configurations in PDSCH-Config (PDSCH configuration).

If configuration of a TCI state (DL or joint TCI state (TCI-State) or UL TCI state (TCI-UL-State)) is absent in a BWP in the CC, the UE can apply configuration of TCI-State or TCI-UL-State from a reference BWP of a reference CC. If the UE is configured with dl-OrJointTCI-StateList or TCI-UL-State in any CC in the same band, the UE does not expect that tci-StatesToAddModList (TCI state list for additional change), SpatialRelationInfo (spatial relation information), and PUCCH-SpatialRelationInfo (PUCCH spatial relation information) excluding SpatialRelationInfoPos (spatial relation information for position) in the band are configured. The UE can assume that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with dl-OrJointTCI-StateList or TCI-UL-State in any CC in the same band in the CC list.

The UE receives an activation command used to map, to code points of a DCI field 'Transmission Configuration Indication' for one or a set of CCs/DL BWPs and one or a set of CCs/UL BWPs, if applicable, up to eight TCI states and/or up to eight TCI state pairs with such one TCI state for a DL channel/signal and/or one TCI state for a UL channel/signal as that described in a TCI state activation/deactivation MAC CE for UE-specific PDSCH (TCI states Activation/Deactivation for UE-specific PDSCH MAC CE) or a unified TCI state activation/deactivation MAC CE (Unified TCI States Activation/Deactivation MAC CE) in a MAC protocol specification.

When a set of TCI state IDs is activated for a set of CCs/DL BWPs and a set of CCs/UL BWPs, if applicable, and an applicable list of CCs is determined by CCs indicated in the activation command, the same set of TCI state IDs is applied to all the DL and/or UL BWPs in the indicated CCs.

If the activation command maps a TCI state (at least one of TCI-State and TCI-UL-State) to only one code point, when the mapping indicated for the single TCI code point is applied in such a manner as that described in a requirement for support of radio resource management (RRM) (MAC CE-based DL TCI state switching delay/MAC CE-based UL TCI state switching delay), the UE applies the indicated TCI state (at least one of TCI-State and TCI-UL-State) to one or a set of CCs/DL BWPs and one or a set of CCs/UL BWPs, if applicable.

When bwp-id or cell for a QCL type A/D source RS in QCL-Info with a TCI state is not configured, the UE assumes that the QCL type A/D source RS is configured in a CC/DL BWP to which the TCI state is applied.

When the presence of a TCI field in the DCI is configured (tci-PresentInDCI set to 'enabled' or tci-PresentDCI-1-2 is configured) for a CORESET, the UE configured with a list of DL or joint TCI states (dl-OrJointTCI-StateList) with an activated TCI state (TCI-State or TCI-UL-State) receives DCI format 1_1/1_2 for providing an indicated TCI state (at least one of TCI-State and TCI-UL-State) for one CC or for all the CCs in the same CC list configured by a simultaneous unified TCI update list (simultaneousU-TCI-UpdateList1-r17, simultaneousU-TCI-UpdateList2-r17, simultaneousU-TCI-UpdateList3-r17, simultaneousU-TCI-UpdateList4-r17). DCI format 1_1/1_2 may be accompanied by DL assignment, if available, or may not be accompanied by DL assignment.

If DCI format 1_1/1_2 is not accompanied by DL assignment, the UE can assume (validate) the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

If the UE receives a higher layer configuration for dl-OrJointTCI-StateList with single TCI-State possible to be used as an indicated TCI state, the UE obtains QCL assumption from a configured TCI state, for a PDSCH DM-RS, a PDCCH DM-RS, and a CSI-RS to which the indicated TCI state is applied.

If the UE receives a higher layer configuration for dl-OrJointTCI-StateList with single TCI-State or single TCI-UL-State possible to be used as an indicated TCI state, the UE determines a UL TX spatial filter, based on a configured TCI state, if applicable, for a dynamic grant-based and configured grant-based PUSCH, a PUCCH, and an SRS to which the indicated TCI state is applied.

When the UE configured with a list of DL or joint TCI states (dl-OrJointTCI-StateList) attempts to transmit a PUCCH with a positive HARQ-ACK or a PUSCH with a positive HARQ-ACK corresponding to DCI for transmitting a TCI state indication and without DL assignment or corresponding to a PDSCH scheduled by DCI for transmitting a TCI state indication, and the indicated TCI state is different from a indicated TCI state that is previously indicated, the indicated TCI state (at least one of indicated TCI-State and indicated TCI-UL-State) starts to be applied from the first slot (beam application time 1) that is at least beamAppTime symbols (beam application time (BAT)) after the last symbol for the PUCCH or the PUSCH. Both of the first slot and the beamAppTime symbols are determined on an active BWP with the lowest SCS in a BWP from a CC with the applied indicated TCI state (at least one of indicated TCI-State and indicated TCI-UL-State) being active at an end of the PUCCH or the PUSCH for transmitting the positive HARQ-ACK.

### {DCI format 1_1...Multiplexing and Channel Coding}

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

A TCI state ID indicating a joint DL/UL TCI state is associated with a TCI field value for the joint DL/UL TCI state indication.

At least one of a TCI state ID indicating a DL-only TCI state and a TCI state ID indicating a UL-only TCI state is associated with a TCI field value for the separate DL/UL TCI state indication. For example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### {Channel/RS to Which Indicated TCI State Is Applied}

An indicated TCI state with a MAC CE/DCI may be applied to the following channels/RSs. The indicated TCI state may be referred to as an indicated unified TCI state or an indicated joint/DL TCI state.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another

### SRS.

In the present disclosure, an indicated TCI state, a unified TCI state, a TCI state applied to a channel/signal configured to follow a unified TCI state, a TCI state applied to a UE-dedicated PDSCH and a CORESET/PDCCH associated with a USS, and a TCI state applied to a PUCCH and a PUSCH may be interchangeably interpreted.

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-Interference Measurement) (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control CSI reporting, based on the report configuration information. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A/AP-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire given carrier (component carrier (CC), cell, serving cell), or may be the entire bandwidth part (BWP) in a given carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (the frequency domain information may include, for example, an RRC IE "pmi-FormatIndicator" used for determination of one of a wideband PMI report or a subband PMI report). The UE may determine, based on at least one of the report quantity information and the frequency domain information, frequency granularity of the CSI report (that is, one of the wideband PMI report and the subband PMI report).

When the wideband PMI report is configured (determined), one wideband PMI may be reported for the entire CSI reporting band. On the other hand, when the subband PMI report is configured, single wideband indication i₁ may be reported for the entire CSI reporting band, and subband indication (one subband indication) i₂ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH or a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

### (JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one of the TRPs interferes with a PDSCH from another TRP.

It is studied that Rel. 18 or later versions supports coherent joint transmission (CJT, mTRP CJT) using up to four TRPs at maximum. Data from four TRPs may be coherently precoded and transmitted to the UE on the same time-frequency resource.

For example, the same precoding matrix may be used in consideration of channels from up to four TRPs (for example, two TRPs). "Coherent" may mean that phases of a plurality of received signals have a given relationship with each other. Signal quality may be improved by using 4-TRP joint precoding, and there may be no interference between the four TRPs. The data may receive only interference outside the four TRPs.

It is assumed that, in Rel. 18 or later versions, one or a plurality of (for example, two) indicated TCI states are applied to a PDSCH applied with CJT (CJT-PDSCH). In the CJT, up to x (for example, x = 4) CSI-RSs may be configured as channel measurement resources (CMRs). Note that a value of x is not limited to 4. In other words, up to four different TCI states may be supported to be configured for up to four CMRs for the CJT.

In this case, it is considered that an indicated TCI state for the CJT-PDSCH is QCLed with at least some of TCI states configured for CSI-RSs as CMRs for the CJT.

In existing systems (for example, Rel. 17 or earlier versions), a unified TCI state that is indicated (indicated unified TCI state) is supported to be applied to a PDSCH and an aperiodic CSI-RS (A-CSI-RS). On the other hand, in the existing systems, the indicated unified TCI state is not applied to a periodic/semi-persistent CSI-RS (P/SP-CSI-RS). Thus, when the CMRs for the CJT include the P/SP-CSI-RS, it is difficult to apply the same TCI state (for example, indicated unified TCI state) to the CJT-PDSCH and the CMRs.

Thus, it is considered that an indicated unified TCI state indicated by a MAC CE/DCI is applied to the P/SP-CSI-RS. However, a case is also considered where the P/SP-CSI-RS is configured for each UE, but is shared by a plurality of UEs (for example, monitored/measured by a plurality of UEs). In this case, dynamically updating, for a specific UE, QCL (or applied TCI state) of the P/SP-CSI-RS by using MAC CE/DCI may also affect another UE.

In view of this, the inventors of the present invention studied unified TCI states corresponding to PDSCHs/CMRs for CJT in a case where configuration of P/SP-CSI-RSs is supported as channel measurement resources (CMRs) for CJT, and came up with the idea of one aspect of the present embodiment.

Embodiments according to the present disclosure will be described in detail with reference to the drawings as follows. Note that the embodiments (for example, the cases) to be described below may each be used individually, or at least two of them may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a restriction that A performs B, a limitation that A performs B, a UE expecting/assuming that A performs B, and a UE not expecting/assuming that A does not perform B may be interchangeably interpreted.

In the present disclosure, a CSI-RS, a CSI-RS resource, a CSI-RS resource set, a CSI-RS configuration, time and frequency resources for a CSI-RS, a CSI-RS port, an antenna port for a CSI-RS, a P/SP/A-CSI-RS resource, an NZP CSI-RS resource, and a CMR may be interchangeably interpreted.

### (Radio Communication Method)

### <Embodiment 1>

Embodiment 1 relates to an example of UE operation in a case where a plurality of CMRs for coherent joint transmission (CJT) are configured.

A UE may be configured with a plurality of CMRs (for example, CMR resource IDs) for CJT. For example, the UE may receive configuration information related to configuration of the plurality of CMRs for the CJT. The configuration information may indicate/configure association between a CMR (for example, a CMR resource) and a unified TCI state (for example, a joint/DL TCI state).

The CMR may be a P/SP/A-CSI-RS. Each CMR may be configured with a joint/DL TCI state or may be configured to follow a joint/DL TCI that is indicated (indicated joint/DL TCI). For example, when the CMR is an A-CSI-RS, the CMR may be configured to follow an indicated joint/DL TCI.

Among the plurality of CMRs for the CJT, the UE may select some CMRs (for example, CMR resource IDs) for the CJT, depending on a TCI state (for example, an indicated joint/DL TCI state) applied to a CJT-PDSCH.

The UE may perform control so as to monitor/measure/report only the selected CMR(s) (for example, CMR resource ID(s)). In this case, it may be presupposed that a joint/DL TCI state of the selected CMR(s) matches the indicated joint/DL TCI state.

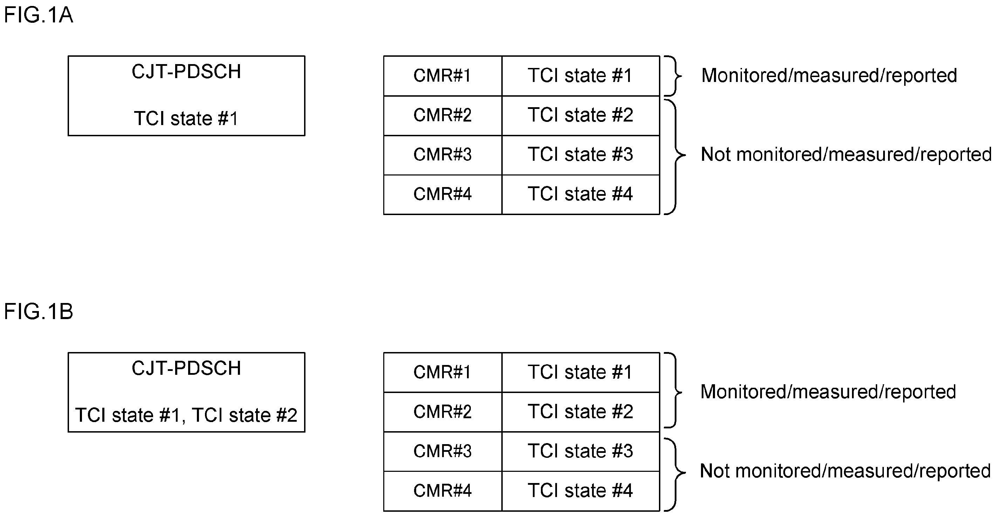

FIG. 1A and FIG. 1B are diagrams to show examples of TCI states (for example, indicated joint/DL TCI states) applied to/indicated for a PDSCH applied/configured with the CJT (for example, the CJT-PDSCH) and TCI states (for example, joint/DL TCI states) corresponding to the CMRs for the CJT. Here, shown is a case of four CMRs configured/activated for the CJT, but the number of CMRs is not limited to this.

The number of CMRs (for example, CMR resource IDs) configured/activated for the CJT may be limited to a given maximum number (for example, 64) or less. The joint/DL TCI states associated with the CMRs for the CJT may be configured by RRC or may be activated by a MAC CE after being configured by the RRC.

FIG. 1A shows a case where one indicated unified TCI state (here, TCI state #1) corresponds (or is applied) to the CJT-PDSCH. FIG. 1A shows a case where TCI state #1 corresponds to CMR #1 and another TCI state (here, TCI states #2 to #4) corresponds to CMR #2 to CMR #4. The TCI state corresponding to the CJT-PDSCH may be dynamically updated by an indicated TCI state (or DCI).

When TCI state #1 is indicated for/applied to the CJT-PDSCH, the UE selects, from the plurality of CMRs, CMR #1 associated with TCI state #1, and performs control so as to monitor/measure/report selected CMR #1. On the other hand, the UE may perform control so as not to monitor/measure/report another CMR.

FIG. 1B shows a case where a plurality of TCI states (here, two TCI states, TCI state #1 and TCI state #2) correspond (or are applied) to the CJT-PDSCH. FIG. 1B shows a case where TCI state #1 corresponds to CMR #1, TCI state #2 corresponds to CMR #2, and another TCI state (here, TCI states #3 to #4) corresponds to CMR #3 to CMR #4.

When TCI state #1 and TCI state #2 are indicated for/applied to the CJT-PDSCH, the UE selects CMR #1 associated with TCI state #1 and CMR #2 associated with TCI state #2, and performs control so as to monitor/measure/report selected CMR #1 and CMR #2. On the other hand, the UE may perform control so as not to monitor/measure/report another CMR.

A network (for example, a base station) may determine an indicated joint/DL TCI state to be applied to the CJT-PDSCH, based on joint/DL TCI states associated with a plurality of CMRs.

When the indicated joint/DL TCI state to be applied to the CJT-PDSCH is updated by a MAC CE/DCI, a CMR resource ID to be monitored/measured/reported by the UE for the CJT may also be updated. When the indicated joint/DL TCI state to be applied to the CJT-PDSCH is updated, the UE may switch, based on the updated indicated joint/DL TCI state, a CMR (for example, a CMR resource ID) to monitor/measure/report.

The UE may assume that an unmonitored CMR is transmitted or may assume that an unmonitored CMR is not transmitted.

In this manner, a specific CMR is selected based on an indicated joint/DL TCI state of the CJT-PDSCH, thereby enabling association between a CMR (for example, a CMR resource ID) and a joint/DL TCI state of the CMR not to be dynamically updated. With this, a plurality of UEs can appropriately share the same CMR resource of a P/SP CSI-RS. On the other hand, a CMR resource ID to be monitored/measured/reported by a UE can be dynamically updated.

### <Embodiment 2>

Embodiment 2 relates to a case where association of the same TCI state with a plurality of CMRs is supported (or a case where association of a plurality of CMRs with one TCI state is supported). Embodiment 2 may be applied in combination with embodiment 1.

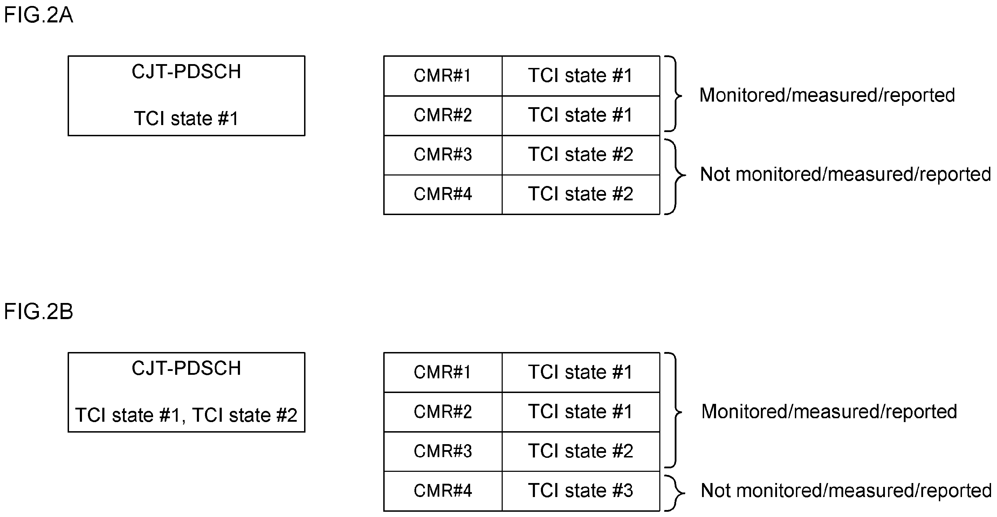

The same TCI state (for example, joint/DL TCI state) may be supported to be configured for a plurality of CMRs configured for CJT (see FIG. 2A and FIG. 2B). A UE may monitor/measure/report CMRs (for example, a plurality of CMRs) associated with a TCI state (for example, the same TCI state ID) corresponding to an indicated unified TCI state corresponding to a PDSCH for the CJT.

FIG. 2A shows a case where one indicated unified TCI state (here, TCI state #1) corresponds (or is applied) to the CJT-PDSCH. FIG. 2A shows a case where TCI state #1 corresponds to CMR #1 and CMR #2 and another TCI state (here, TCI state #2) corresponds to CMR #3 to CMR #4. The TCI state corresponding to the CJT-PDSCH may be dynamically updated by an indicated TCI state (or DCI).

When TCI state #1 is indicated for/applied to the CJT-PDSCH, the UE selects, from the plurality of CMRs, CMR #1 and CMR #2 associated with TCI state #1, and performs control so as to monitor/measure/report selected CMR #1 and CMR #2. On the other hand, the UE may perform control so as not to monitor/measure/report another CMR.

FIG. 2B shows a case where a plurality of TCI states (here, two TCI states, TCI state #1 and TCI state #2) correspond (or are applied) to the CJT-PDSCH. FIG. 2B shows a case where TCI state #1 corresponds to CMR #1 and CMR #2, TCI state #2 corresponds to CMR #3, and another TCI state (here, TCI state #3) corresponds to CMR #4.

When TCI state #1 and TCI state #2 are indicated for/applied to the CJT-PDSCH, the UE selects CMR #1 and CMR #2 associated with TCI state #1 and CMR #3 associated with TCI state #2, and performs control so as to monitor/measure/report selected CMR #1, CMR #2, and CMR #3. On the other hand, the UE may perform control so as not to monitor/measure/report another CMR.

The numbers of CMRs, the numbers of TCI states, and the associations between CMRs and TCI states shown in FIG. 2A and FIG. 2B are merely examples, and are not restrictive.

When configuration of the same TCI state (for example, joint/DL TCI state) is supported for a plurality of CMRs configured for the CJT, the number of CMRs (for example, CMR resources) for the CJT configured with the same TCI state may be limited. In the present disclosure, the number of CMRs (for example, CMR resources) for the CJT configured with the same TCI state may be interpreted as the number of CMRs (for example, CMR resources) for CJT associated with the same TCI state, or the number of CMRs (for example, CMR resources) monitored/measured/reported by the UE.

The number of CMRs for the CJT configured with the same TCI state may be limited to a given value (X) or less. The given value (X) may be defined in a specification, may be configured to the UE by RRC, or may be determined based on a UE capability (for example, reported UE capability information). X may be determined based on the number of TRPs applied/supported with the CJT. For example, X may equal 4 for up to four TRPs. As a matter of course, X is not limited to this, and may equal 2, or may be another value.

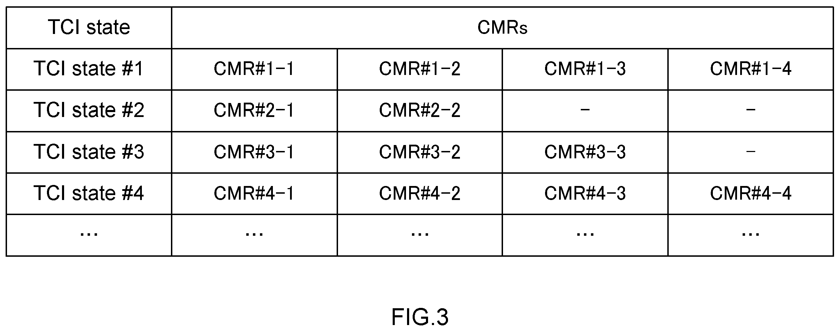

FIG. 3 shows a case where up to X or X or less (here, X = 4) CMRs are associated with each TCI state (here, TCI state #1 to TCI state #4). Each TCI state may correspond to a TCI state (for example, an indicated joint/DL TCI state) applied to a PDSCH for the CJT. The TCI state may be configured for each CSI-RS resource. The association between the TCI state and the CMRs may be interpreted as association between a TCI state and CSI-RS resources (for example, CSI-RSs corresponding to CMRs).

FIG. 3 shows a case where four CMRs (here, CMR #1-1 to CMR #1-4) are associated with TCI state #1, two CMRs (here, CMR #2-1 to CMR #2-2) are associated with TCI state #2, three CMRs (here, CMR #3-1 to CMR #3-3) are associated with TCI state #3, and four CMRs (here, CMR #4-1 to CMR #4-4) are associated with TCI state #4.

The numbers of CMRs associated with the respective TCI states may be different (see FIG. 3) or common.

When one TCI state is applied to/indicated for the CJT-PDSCH, the number of CMRs for the one TCI state is up to X (or X or less). In this case, the UE may select CMR(s) associated with the same TCI state (or corresponding TCI state) as the TCI state applied to the CJT-PDSCH, and may monitor/measure/report the selected CMR(s). With this, the number of CMRs to be selected can be X or less. Consequently, an increase in load on the UE can be suppressed.

Alternatively, the number of CMRs for the CJT selected (or monitored/measured/reported) by the UE may be configured to be a given value (X') or less. In this case, the number of CMRs for the CJT configured with the same TCI state may or may not be limited.

For example, when two TCI states are applied to/indicated for the CJT-PDSCH, a case is assumed where a total number of CMRs related to the two TCI states exceeds X. For example, in FIG. 3, when TCI state #1 and TCI state #2 are applied to/indicated for the CJT-PDSCH, a total number of CMRs related to the two TCI states is six. In FIG. 3, when TCI state #1 and TCI state #4 are applied to/indicated for the CJT-PDSCH, a total number of CMRs related to the two TCI states is eight.

When a total number of CMRs associated with TCI state(s) applied to/indicated for the CJT-PDSCH exceeds the given value (X'), CMR(s) less than or equal to the given value (X') may be selected based on a given rule. The given value (X') may be the same value as a maximum number of CMRs associated with each TCI state (for example, X), or may be a value different from X (for example, 2X). The given value (X') may be defined in a specification, may be configured to the UE by RRC, or may be determined based on a UE capability (for example, reported UE capability information).

When a total number of CMRs associated with one or more TCI states applied to/indicated for the CJT-PDSCH exceeds the given value (X'), the UE may select, based on the given rule, CMR(s) less than or equal to the given value (X') and may perform control so as to monitor/measure/report the selected CMR(s).

The given rule for selecting CMR(s) less than or equal to the given value (X') may be defined in a specification or may be configured by RRC. The given rule may be selection based on IDs (for example, CMR resource IDs) of CMRs associated with TCI state(s) applied to/indicated for the CJT-PDSCH. For example, the UE may select, from the CMRs associated with the TCI state(s) applied to/indicated for the CJT-PDSCH, X CMRs in ascending (or descending) order of CMR resource IDs.

With this, even when a total number of CMRs associated with one or more TCI states applied to/indicated for the CJT-PDSCH exceeds the given value (X'), CMRs to be monitored/measured/reported can be narrowed down. Consequently, an increase in processing of the UE can be suppressed.

### {Variations}

When a plurality of (for example, two) TCI states are applied to/indicated for the CJT-PDSCH, and a total number of CMRs associated with the respective TCI states exceeds the given value (X'), at least one CMR associated with each TCI state may be selected. For example, the UE performs selection so as to include, in the selection of CMRs less than or equal to the given value (X'), at least one CMR associated with a first TCI state applied to the CJT-PDSCH and at least one CMR associated with a second TCI state.

For example, at least one CMR corresponding to each TCI state may be selected based on the lowest/highest CMR ID (for example, CMR resource ID), and remaining CMR(s) may be selected in ascending order (or descending order) of CMR resource IDs. With this, when a plurality of (for example, two) TCI states are applied to/indicated for the CJT-PDSCH, at least one CMR corresponding to each TCI state can be selected.

### <Embodiment 3>

Embodiment 3 relates to a case where one CMR corresponds to each TRP, and each CMR includes a TRP-specific reference signal (RS) as a QCL source.

One CMR may be defined for (or associated with) each TRP, and each CMR may include a TRP-specific reference signal (RS) as a QCL source. The TRP-specific reference signal may be a tracking reference signal (TRS) or a tracking CSI-RS.

For example, when up to four TRPs are supported for CJT, each of up to four CMRs includes the TRP-specific RS as a QCL resource.

When a CJT cluster is sufficiently small, a common TRS may be applied to different CMRs (or TRPs). A network (for example, a base station) may indicate, based on feedback from a UE, two TCI states corresponding to two TRSs to transmit a PDSCH.

In PDSCH configuration (for example, PDSCH-Config), the number of joint/DL TCI states configured as unified TCI states may be controlled to be up to X (or X or less). X may correspond to a total number of different TCI states of all the CMRs for the CJT. In other words, an association/restriction may be provided between joint/DL TCI states in the PDSCH configuration (or TCI states configured/activated/indicated for a CJT-PDSCH) and TCI states configured for/associated with the CMRs for the CJT. A maximum number of X may be 4 or less. As a matter of course, a maximum number of X is not limited to this.

A MAC CE for activating TCI states for the PDSCH may activate only up to X TCI states. The TCI states activated by the MAC CE for the PDSCH may include X TCI states for CMR (or some/all of the X TCI states).

The UE may be configured with a plurality of CMRs for the CJT. For example, a given number of CMRs or less (for example, up to four CMRs) may be configured for the CJT, and each CMR may be configured with a different TCI state (alternatively, a different TCI state may be associated with each CMR). The TCI states corresponding to the respective CMRs may correspond to joint/DL TCI states configured in the PDSCH configuration, and indicated joint/DL TCI states applied to/indicated for the CJT-PDSCH may be selected from the TCI states corresponding to the respective CMRs.

After the UE measures/reports CSI of the CMRs for the CJT, the network (for example, the base station) may indicate one or a plurality of (for example, two) TCI states for the CJT-PDSCH.

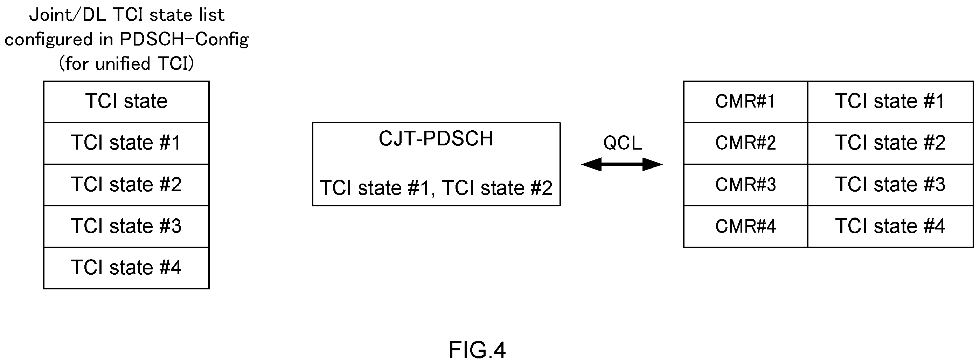

One or both of the indicated TCI states may be the same as TCI state(s) configured for some of the CMRs for the CJT. In other words, the base station may indicate one or two TCI states for the CJT-PDSCH, among TCI states associated with the CMRs for the CJT (for example, {TCI state #1, TCI state #2, TCI state #3, TCI state #4} (see FIG. 4).

FIG. 4 shows a case where, in the PDSCH configuration (for example, PDSCH-Config), TCI state #1 to TCI state #4 are configured for unified TCI states, and TCI state #1 to TCI state #4 are associated with CMR #1 to CMR #4. The UE monitors/measures/reports CMR #1 to CMR #4. The base station may select, based on the report from the UE, one or two TCI states from the respective TCI states corresponding to CMR #1 to CMR #4, and may indicate the selected TCI state(s) for the CJT-PDSCH.

The base station may dynamically indicate, for a PDSCH for the CJT, one or two indicated joint/DL TCI states among TCI states configured to be a given number of TCI states or less. The configured TCI states may be the same as the TCI states associated with the CMRs for the CJT. The CMRs for the CJT may be QCL sources with TCI states configured by the PDSCH configuration (for example, PDSCH-Config).

In this manner, up to four TCI states are associated with a given number of (for example, four) CMRs, and the base station indicates, based on feedback (for example, a measurement report) from the UE, one or two TCI states among the four TCI states for the CJT-PDSCH. In this case, there is no need to thereafter update QCL sources of the CMRs, and thus the base station can always configure four TCI states for measurement and can indicate one or two TCI states among them for the CJT-PDSCH.

With embodiment 3, even when a TCI state applied to a CJT-PDSCH is dynamically switched by a MAC CE/DCI in a case where P/SP-CSI-RSs are supported as CMRs, it is possible to control reception operation of the UE without dynamically switching a unified TCI state corresponding to each CMR by using the MAC

### CE/DCI.

### <Variations>

At least one of embodiment 1 to embodiment 3 may be applied to any one of P/SP/A-CSI-RSs as CMRs for CJT.

Alternatively, at least one of embodiment 1 to embodiment 3 may be applied to any one of P/SP-CSI-RSs as CMRs for CJT. In this case, at least one of embodiment 1 to embodiment 3 may not be applied to A-CSI-RSs.

In embodiment 1 to embodiment 3, the maximum number of CMRs configured for the CJT may be a given value (for example, 4) (for example, FIGS. 1A and 1B, FIGS. 2A and 2B), or another value (for example, a value greater than 4) may be used.

For example, the maximum number of CMRs for the CJT may be 8 or 64. In this case, DCI may dynamically indicate a joint/DL TCI state indicated among up to eight active joint/DL TCI states. Also, a MAC CE may activate/indicate an indicated joint/DL TCI state among 64 configured joint/DL TCI states.

When the CMRs for the CJT are P-CSI-RSs, TCI states for the P-CSI-RSs are configured by RRC, and thus configuration of up to 64 CMRs (for example, CMRs for CJT) may be supported. When the CMRs for the CJT are SP-CSI-RSs, TCI states for the SP-CSI-RSs are updated by a MAC CE, and thus configuration of up to 8 CMRs (for example, CMRs for CJT) may be supported.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in an existing standard being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a standard, or a UE/BS may be notified of the specific condition by using higher layer signaling/physical layer signaling.

The specific condition may indicate at least one of the following:
- configuration of enabling of at least one of the above-described embodiments

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above
- a UE supporting at least one of definition and configuration of an association between a configured CSI-RS resource/CMR and an indicated (activated) TCI state for CJT Separate UE capabilities may be introduced for the respective options of the embodiments. Separate UE capabilities may be introduced for P/SP/A-CSI-RS resources configured for CSI.
- a UE supporting application of an indicated TCI state to a configured CSI-RS resource/CMR How the UE applies an indicated TCI state to a configured CSI-RS resource/CMR. Separate UE capabilities may be introduced for the respective options of the embodiments. Separate UE capabilities may be introduced for P/SP/A-CSI-RS resources configured for CSI.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- Information indicating enabling/disabling of the operation of the above-described embodiment
- An RRC parameter for a specific release (for example, Rel. 18/19) The RRC parameter may have a name obtained by attaching "r18"/"r19" to the name of an existing RRC parameter.

When not supporting at least one of the specific UE capabilities or not configured with the specific information, the UE may apply operation of Rel. 15/16, for example.

### (Supplementary Notes)

Regarding one embodiment of the present disclosure, the following supplementary notes of the invention will be given.

### {Supplementary Note 1}

A terminal including:
a receiving section that receives configuration information related to configuration of a plurality of channel measurement resources for coherent joint transmission (CJT); and
a control section that judges, based on an indicated unified transmission configuration indicator (TCI) state corresponding to a downlink shared channel (PDSCH) applied with the CJT, one or more channel measurement resources on which at least one of monitoring, measurement, and reporting is to be performed.

### {Supplementary Note 2}

The terminal according to supplementary note 1, wherein the configuration information configures unified TCI states corresponding to the plurality of respective channel measurement resources, and a number of channel measurement resources associated with a same unified TCI state is limited.

### {Supplementary Note 3}

The terminal according to supplementary note 1 or 2, wherein when a number of channel measurement resources associated with the indicated unified TCI state corresponding to the PDSCH is larger than a given value, the control section selects some channel measurement resources from a plurality of channel measurement resources larger than the given value, and performs at least one of the monitoring, the measurement, and the reporting.

### {Supplementary Note 4}

The terminal according to any one of supplementary notes 1 to 3, wherein the channel measurement resource is at least one of a periodic channel state information reference signal (CSI-RS) and a semi-persistent CSI-RS.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

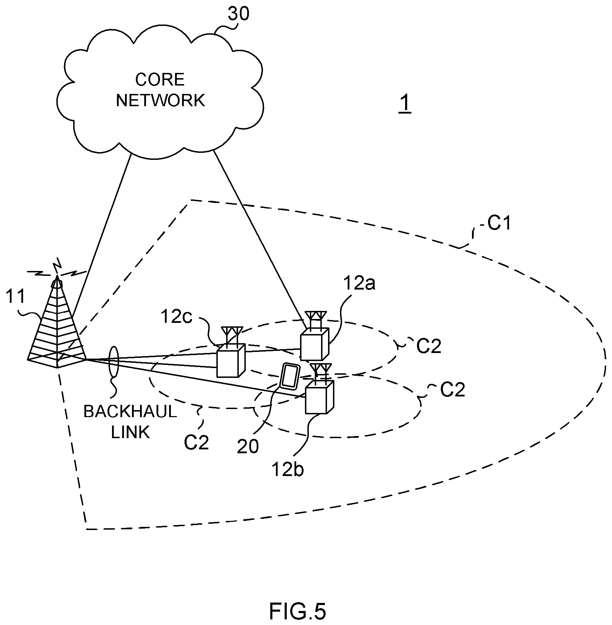

FIG. 5 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

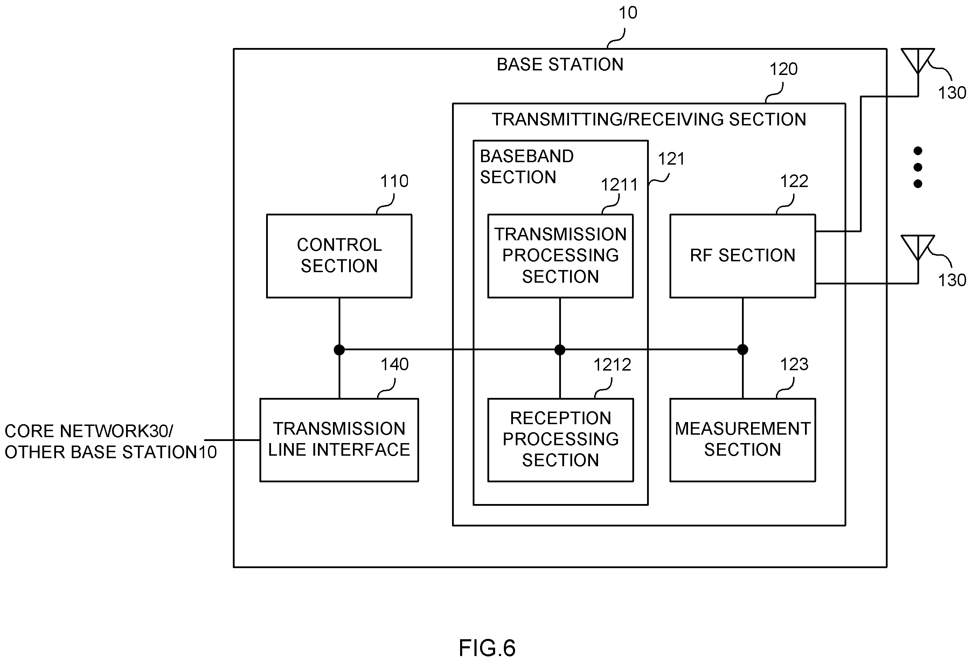

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information related to configuration of a plurality of channel measurement resources for coherent joint transmission (CJT).

The control section 110 may indicate, based on a unified transmission configuration indicator (TCI) state corresponding to any one of the plurality of channel measurement resources, an indicated unified TCI state corresponding to a downlink shared channel (PDSCH) applied with the CJT.

### (User Terminal)

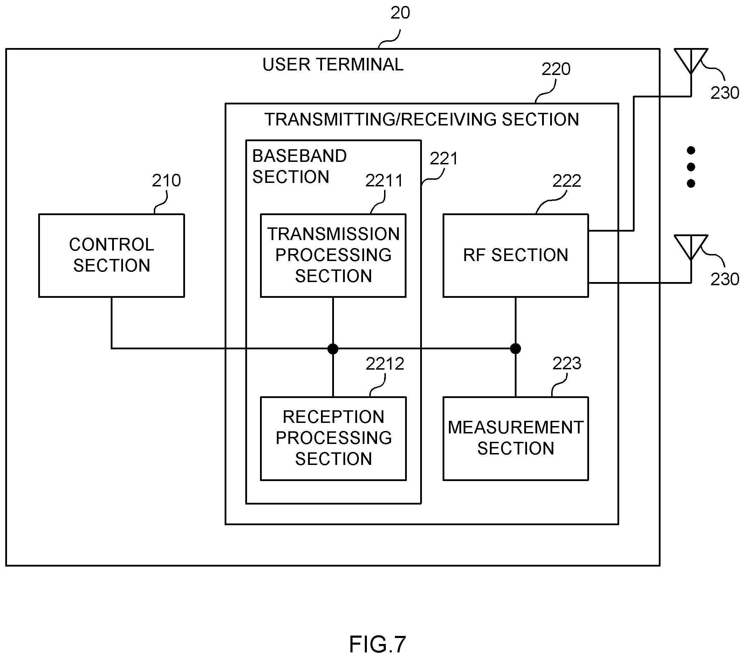

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information related to configuration of a plurality of channel measurement resources for coherent joint transmission (CJT).

The control section 210 may judge, based on an indicated unified transmission configuration indicator (TCI) state corresponding to a downlink shared channel (PDSCH) applied with the CJT, one or more channel measurement resources on which at least one of monitoring, measurement, and reporting is to be performed.

The configuration information may configure unified TCI states corresponding to the plurality of respective channel measurement resources, and a number of channel measurement resources associated with a same unified TCI state may be limited.

When a number of channel measurement resources associated with the indicated unified TCI state corresponding to the PDSCH is larger than a given value, the control section 210 may select some channel measurement resources from a plurality of channel measurement resources larger than the given value, and may perform control so as to perform at least one of the monitoring, the measurement, and the reporting.

The channel measurement resource may be at least one of a periodic channel state information reference signal (CSI-RS) and a semi-persistent CSI-RS.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

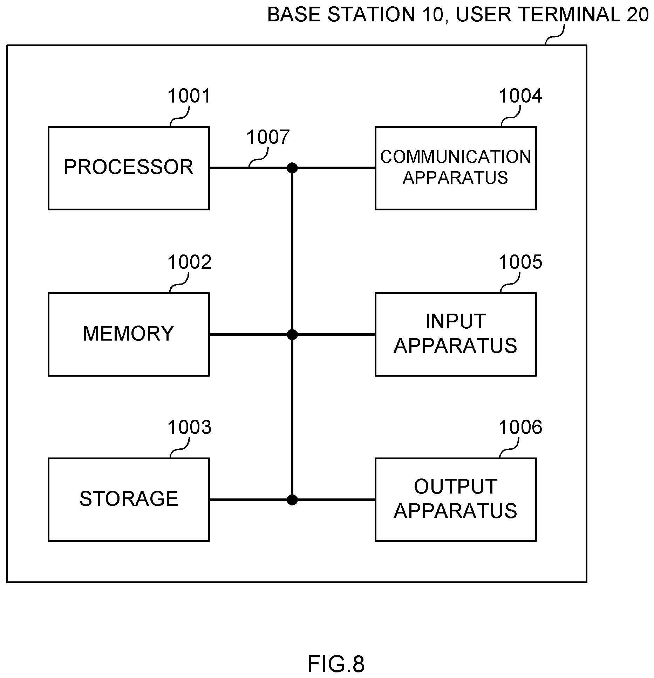

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

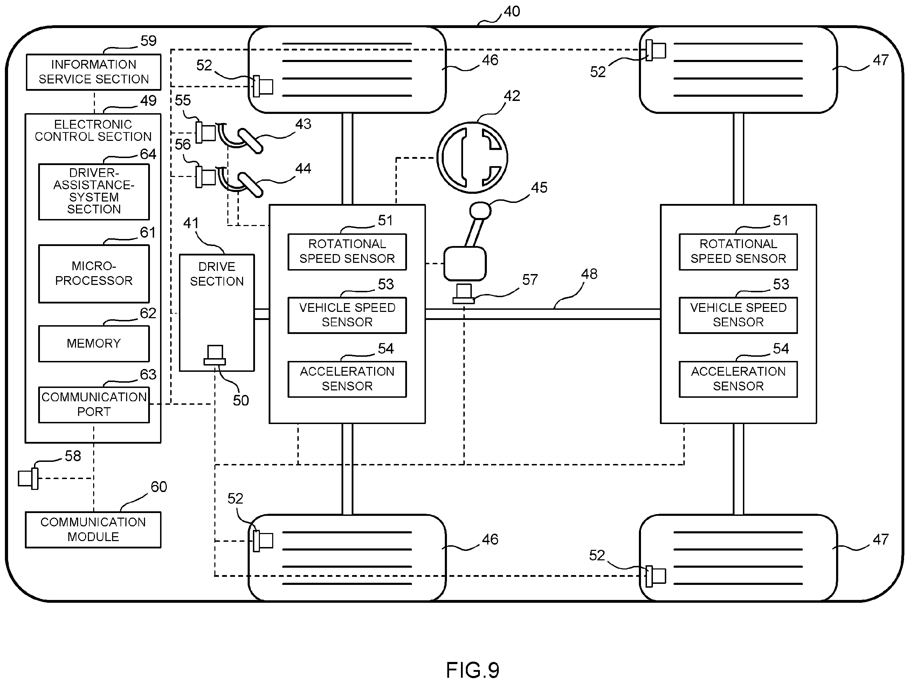

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives configuration information related to configuration of a plurality of channel measurement resources for coherent joint transmission (CJT); and
a control section that judges, based on an indicated unified transmission configuration indicator (TCI) state corresponding to a downlink shared channel (PDSCH) applied with the CJT, one or more channel measurement resources on which at least one of monitoring, measurement, and reporting is to be performed.

2. The terminal according to claim 1, wherein
the configuration information configures unified TCI states corresponding to the plurality of respective channel measurement resources, and a number of channel measurement resources associated with a same unified TCI state is limited.

3. The terminal according to claim 1, wherein
when a number of channel measurement resources associated with the indicated unified TCI state corresponding to the PDSCH is larger than a given value, the control section selects some channel measurement resources from a plurality of channel measurement resources larger than the given value, and performs at least one of the monitoring, the measurement, and the reporting.

4. The terminal according to claim 1, wherein
the channel measurement resource is at least one of a periodic channel state information reference signal (CSI-RS) and a semi-persistent CSI-RS.

5. A radio communication method for a terminal, the radio communication method comprising:
receiving configuration information related to configuration of a plurality of channel measurement resources for coherent joint transmission (CJT); and
judging, based on an indicated unified transmission configuration indicator (TCI) state corresponding to a downlink shared channel (PDSCH) applied with the CJT, one or more channel measurement resources on which at least one of monitoring, measurement, and reporting is to be performed.

6. A base station comprising:
a transmitting section that transmits configuration information related to configuration of a plurality of channel measurement resources for coherent joint transmission (CJT); and
a control section that indicates, based on a unified transmission configuration indicator (TCI) state corresponding to any one of the plurality of channel measurement resources, an indicated unified TCI state corresponding to a downlink shared channel (PDSCH) applied with the CJT.
